# EUROPÄISCHE PATENTSCHRIFT

(11) **EP 2 584 110 B1**
(45) Veröffentlichungstag und Bekanntmachung des Hinweises auf die Patenterteilung: **12.04.2023**
(21) Anmeldenummer: 12189064.4
(22) Anmeldetag: 18.10.2012
(51) Int. Cl.: E04B 1/68, C08J 9/42, C08G 101/00

(54) **Dichtband**
Sealing tape
Bande étanche

(30) Priorität: 21.10.2011 DE 202011107000 U
(43) Veröffentlichungstag der Anmeldung: 24.04.2013
(73) Patentinhaber: Tremco CPG Germany GmbH, 92439 Bodenwöhr (DE)
(72) Erfinder: Komma, Markus, 93128 Regenstauf (DE); Pronold, Michael, 92543 Guteneck (DE)
(74) Vertreter: Bittner, Bernhard

(56) Entgegenhaltungen:
- EP-A1- 1 600 571
- EP-A1- 1 983 121
- DE-U1- 20 306 687

## Beschreibung

Die Erfindung betrifft ein Dichtband aus einem weichen Polyurethan-Schaumstoff, welches eine Luftdurchlässigkeit von höchstens 150 l/m²s aufweist und welches zur verzögerten Rückstellung zumindest im Wesentlichen homogen über dessen gesamten Querschnitt und Länge imprägniert ist.

Ein derartiges Dichtband ist aus der EP 1 600 571 A1 bekannt, welches auf einem weichen Schaumstoff mit einer Luftdurchlässigkeit von höchstens 50 l/m²s besteht. Um dieses Dichtband zur verzögerten Rückstellung auszubilden, wird das gesamte Dichtband homogen mit einem Imprägnat über im Wesentlichen die gesamte Länge und Breite getränkt. Hierzu wird eine wässrige Bindemittellösung, vorzugsweise Acrylatlösung eingesetzt.

Obwohl das derart erhaltene Dichtband Rückstelleigenschaften aufweist und auch bei Temperaturen ab -10°C nach Aufhebung der die Kompression bewirkenden Kraft eine Rückstellung in den vollständig zurückgestellten Zustand vollführt, also an sich eine zuverlässige Rückstellung erbringt, hat sich die praktische Handhabung dieses Dichtbandes nicht unter sämtlichen Einsatzbedingungen bewährt. So wurde festgestellt, dass die Rückstellung zwar zuverlässig jedoch für viele Anwendungsfälle zu schnell erfolgt, sodass also nicht eine ausreichende Rückstellzeit bis zur vollständigen Rückstellung eingehalten werden kann. Dies hat praktische Nachteile, beispielsweise dann, wenn großflächige Fenster oder andere Bauwerksteile oder eine große Anzahl derselben mit gattungsgemäßen Dichtbändern bestückt und praktisch gleichzeitig zur Rückstellung gebracht werden. Das Problem verschärft sich, wenn die entsprechenden Fenster- oder Bauwerksteile aufgrund besonderer Bedingungen vor Ort nur zeitaufwändig in die jeweiligen Mauerwerksöffnungen eingesetzt werden können. Es versteht sich, dass eine vergleichsweise schnelle Rückstellung dann nachteilig ist, da diese unter Umständen ein derartiges Ausmaß angenommen haben kann, dass diese die Einführung des jeweiligen Bauteils in die Mauerwerksöffnung behindert. Entsprechendes gilt, wenn der Einbau des Dichtbandes in die sich ergebende Fuge erfolgen soll, wenn der Rahmen bzw. das Bauteil vorher ohne Dichtband eingebaut worden ist. Weiterhin ist aus der EP 0 688 382 A1 ein über im Wesentlichen dessen gesamte Länge und Breite zur verzögerten Rückstellung imprägniertes Dichtband bekannt, welches jedoch eine vergleichsweise hohe Luftdurchlässigkeit von 250-260 1/m²s gemessen nach DIN 53887 aufweist. Derart offenporige Dichtbänder erfüllen jedoch zumeist nicht die heutigen hohen Erfordernisse an Luftdichtigkeit im Hinblick auf die geforderten Wärmedämmwerte. Andererseits sind aus der EP 0 688 382 A1 auch Dichtbänder aus Schaumstoffen mit hohem Luftwiderstand, also beispielsweise Luftdurchlässigkeiten im Bereich von 30-60 1/m²s bekannt. Diese weisen jedoch nur eine Imprägnierung im Rand-Längsbereich auf. Der mittlere Bereich der Dichtbänder ist somit nicht zur verzögerten Rückstellung imprägniert, sodass derartige Dichtbänder nur für besondere Anwendungszwecke geeignet sind.

Die EP 1983121 A1 beschreibt ein imprägniertes Dichtband mit einem relativ geschlossenzelligem oder offenzelligem Schaumstoff, wobei das Dichtband eine Vielzahl von Einschnitten oder Ausnehmungen aufweist, durch welche eine Imprägnierung des Dichtbandes ermöglicht ist, bspw. mittels Acrylatdispersionen. Die EP 1 983 121 A1 offenbart die Merkmale des Oberbegriffs des Anspruchs 1.

Die DE 20306687 U1 beschreibt ein Dichtungsband mit einem Kern aus weichem Schaumstoff mit einer Zugverstärkungsschicht, welches mit einer wässrigen Acrylatdispersion imprägniert sein kann.

Die EP 1600571 A1 beschreibt ein Dichtungselement aus einem weichen Schaumstoff mit einer Luftdurchlässigkeit von höchstens 50 l/m2s, welches eine homogene verzögerte Rückstellung aufweist.

Weiterhin müssen gattungsgemäße Dichtbänder einschließlich Imprägnierung eine Reihe weiterer Anforderungen erfüllen, beispielsweise UV-beständig und in Grenzen wärmebeständig sein, da diese Dichtbänder auch bei gegenüber Raumtemperatur (20°C) erhöhten Temperaturen eingesetzt werden können, beispielsweise bei Verwendung bei erhöhten Außentemperaturen wie im Sommer oder in heißen Klimazonen. Weiterhin ist es unter Umständen erforderlich, die Dichtbänder durch externe Wärmequellen wie Heizelemente zu erwärmen, um eine beschleunigte Rückstellung zu erzielen. Zwar werden derartige Maßnahmen zumeist angewandt, wenn nur niedrige Außentemperaturen vorliegen, auch dann können die Dichtbänder im Bereich der Heizelemente jedoch zumindest lokal erhöhte Temperaturen annehmen. Bei derartigen Anwendungsfällen ist es erforderlich, dass das Imprägniermittel eine nur vergleichsweise geringe Diffusion oder Migration in angrenzende Bauwerksoder Bauteilbereiche wie die anliegenden Rahmenprofile oder Mauerwerkslaibungsflächen aufweist. Dies gilt insbesondere dann, wenn das Dichtband zur Abdichtung von Fenstern oder anderen Bauwerksteilen mit vergleichsweise empfindlichen Oberflächen eingesetzt werden soll, beispielsweise wenn zumindest eine der Anlageflächen des Bandes aus einem Kunststoffmaterial besteht, insbesondere einem hellen oder weißen Kunststoffmaterial. Hierbei muss sichergestellt werden, dass das Imprägniermittel auch bei erhöhter Temperatur auch über längere Zeiträume die angrenzenden Bauteilbereiche auch hinsichtlich deren optischer Eigenschaften nicht negativ beeinträchtigt. Dies gilt insbesondere auch, wenn eine Fugenflanke ein poröser Stein oder Mauerwerk oder Naturstein ist.

Weiterhin soll das Rückstellverhalten des Dichtbandes auch über einen ausreichenden Temperaturbereich sich nur vergleichsweise wenig verändern, um gute Einbaubedingungen zu ergeben. Dies ist bei einer Imprägnierung mit Bitumen oft nicht gegeben, da bei vergleichsweise geringen Temperaturschwankungen das Rückstellverhalten sich vergleichsweise stark ändert, also bei zunehmend tiefen Temperaturen sich stark verlangsamt und bei zunehmenden Temperaturen sich vergleichsweise stark beschleunigt.

Der Erfindung liegt die Aufgabe zugrunde, ein gattungsgemäßes Dichtband bereitzustellen, welches die oben genannten Probleme löst. Insbesondere liegt der Erfindung die Aufgabe zugrunde, ein gattungsgemäßes Dichtband bereitzustellen, welches auch bei Anbringung an Bauteilen und Freigabe zur verzögerten Rückstellung eine einfache Handhabung derselben ermöglicht und zugleich angrenzende Bauteil- oder Bauwerksbereiche über lange Anwendungszeiträume nicht beeinträchtigt und auch bei sich ändernden Umgebungsbedingungen vergleichsweise zuverlässig handhabbar ist. Die Aufgabe wird durch die Bereitstellung eines Dichtbandes nach Anspruch 1 gelöst sowie durch ein Bauwerk mit in einer Fuge angeordnetem Dichtband nach Anspruch 11.

Es hat sich überraschenderweise herausgestellt, dass durch die Bereitstellung eines gattungsgemäßen Dichtbandes, bei welchem das Imprägniermittel zur verzögerten Rückstellung eine Acrylatdispersion mit in homogener Phase dispergierten Acrylatpolymerteilchen ist und welches die weiteren Merkmale des Anspruchs aufweist, die Aufgabe gelöst werden kann. Überraschenderweise ist eine Imprägnierung eines Dichtbandes mit einer für das Dichtband resultierenden Luftdurchlässigkeit von höchstens 150 l/m²s, insbesondere auch von ≤ 100 l/m²s oder gar ≤ 50 l/m²s, mit einer Acrylatdispersion enthaltend dispergierte Acrylatpolymerteilchen möglich. Es wurde festgestellt, dass derartige Acrylatpolymerteilchen in die Poren eines derartigen Dichtbandes aus weichem Polyurethan-Schaumstoff eindringen können, und zwar über den gesamten Querschnitt desselben, sodass ein Dichtband mit über den gesamten Querschnitt homogener Rückstellimprägnierung erhältlich ist. Dies ist überraschend, da einerseits ein Dichtband mit derart geringer Luftdurchlässigkeit auch nur einen geringen Porendurchmesser bzw. Öffnungsquerschnitt an den Porenübergängen aufweist. Andererseits müssen die Polymerteilchen der Dispersion, welche somit als diskrete und in der homogenen Phase dispergierte Partikel vorliegen, in die Poren eindringen, und zwar über den gesamten Querschnitt des Dichtbandes. Dass dies erfolgt, ist überraschend, da andererseits die Acrylatpolymerteilchen an sich untereinander eine gewisse Klebekraft und auch eine Adhäsion an den Porenwänden des Schaumstoffmaterials aufweisen, um eine verzögerte Rückstellung zu bewirken ( der nach der Trocknung resultierende Acrylatpolymerfilm legt sich um die komplette Schaumstruktur, bei der Kompression berühren sich die Filme gegenüberliegender Porenwände und haften aneinander, bei der Rückstellung trennen sich die Filme langsam unter Verzögerung der Rückstellung voneinander). Anscheinend können jedoch derartige Acrylatpolymerteilchen die Porenstruktur eines Polyurethan-Schaumstoffs mit der gegebenen geringen Luftdurchlässigkeit trotz der Klebkraft derselben penetrieren. Die Rückstellimprägnierung des Dichtbandes ist somit aus Acrylatpolymerteilchen gebildet, welche unter Trocknung einen Imprägniermittelfim bilden können bzw. bilden.

Erfindungsgemäß weist das Klebmittel (die polymeren Bestandteile des Imprägniermittels nach Trocknung) eine Glasübergangstemperatur von ≥ -70°C auf, nämlich bis zu +20°C.

Nach einer ersten besonders bevorzugten Ausführungsform liegt die Glasübergangstemperatur Tg des Klebmittels im Bereich von -70 bis -45°C, vorzugsweise im Bereich von -65 bis -50°C. Derartig imprägnierte Dichtelemente zeigen bei 20°C eine ausreichend starke Expansion oder Rückstellung auch ohne zusätzliche Hilfsmittel wie eine Wärmeeinbringung. Nach einer anderen besonders bevorzugten Ausführungsform weist das Klebmittel eine Glasübergangstemperatur Tg im Bereich von -45 °C oder von -40°C bis -10°C oder bis 0°C auf, gegebenenfalls eine Glasübergangstemperatur von ≥ -35°C oder von ≥ -30°C, beispielsweise bis zu -10°C oder bis zu 0°C. Derartig imprägnierte Dichtelemente expandieren nicht bei 20°C, sondern erst bei 40°C oder mehr.

Das erfindungsgemäße mit dem Imprägniermittel zur verzögerten Rückstellung imprägnierte Dichtband weist im freien Zustand eine vollständige Rückstellung innerhalb von ≥ 15-20 min oder ≥ 30-45 min, vorzugsweise 1-1,5 h oder besonders bevorzugt ≥ 2-2,5 h auf. Die Rückstellungszeit beträgt vorzugsweise ≤ 20-24 h, vorzugsweise ≤ 12-16 h, besonders bevorzugt ≤ 8-10 h oder insbesondere bevorzugt ≤ 6 h. Typischerweise kann die Rückstellzeit im Bereich von 3 bis 4 Stunden liegen. Die Rückstellzeit kann insbesondere durch die Menge des in das Dichtband eingebrachten Imprägniermittels bzw. dessen Gewichtsanteil an Acrylatdispersion (bezogen auf den jeweiligen Feststoff) in Bezug auf das Gewicht des Schaumstoffmaterials eingestellt werden. Die im Rahmen der Erfindung angegebene Rückstellzeit bezieht sich jeweils auf 20°C/50% relativer Luftfeuchtigkeit, sofern sich aus dem Zusammenhang sonst nichts anderes ergibt. Die Rückstellhöhe ist hierbei die Höhe des eingesetzten Rohschaums minus Druckverformungsrest.

Weiterhin kann durch die Einbringung der Polymerteilchen in den Schaumstoff das Rückstell-und Abdichtverhalten im Vergleich mit einer Bindemittellösung, also einer homogenen Phase mit Lösungsmittel und chemisch gelösten Bindemittelmolekülen (mit ansonsten hinsichtlich der chemischen Zusammensetzung und physikalischen Eigenschaften, einschließlich mittlerem Molekulargewicht möglichst ähnlichen Eigenschaft im Vergleich zu denen der Dispersion), deutlich verbessert werden. Dies bezieht sich insbesondere auch auf die Ausblutungseigenschaften des eingebauten Dichtbandes bei erhöhter Temperatur und erhöhtem Druck, z.B. bei oberhalb 40-50°C, bspw. im Bereich von 40-60°C, und bei einer Kompression des Dichtbandes auf ≤ 7-10% oder ≤ 5% dessen Volumens (bzw. jeweils Höhe) bei vollständiger freier Rückstellung. Insbesondere können sich die obigen Angaben auf einen Temperaturbereich von 40-60°C beziehen, bspw. eine Temperatur von 50°C. Derartige Bedingungen können sich ergeben bei temperaturbedingten Bauteilbewegungen, beispielsweise im Sommer, wenn durch die Bauteilbewegungen der das Dichtband aufnehmende Spalt aufgrund der thermischen Expansion der Bauteile unter dessen Sollweite verengt und das Dichtband hierdurch unerwünscht hoch komprimiert wird. Es wurde im Zuge der Erfindung festgestellt, dass aus chemischen Lösungen hergestellte Imprägniermittelfilme deutlich schlechtere Eigenschaften zeigen als aus einer Dispersion erzeugte Imprägniermittelfilme (unter sonst möglichst ähnlichen Eigenschaften und Zusammensetzungen der Imprägniermittel und der Acrylatpolymere im speziellen, einschließlich deren Molekulargewicht). So neigen Lösungsmittel-Imprägniermittelfilme deutlich stärker zum Fließen und können unter den genannten Bedingungen (z.B. 50°C, Kompressionsgrad 5-10% des Bandes, insbesondere in der Höhe) bereits durch die Kompression aus dem Schaumkörper herausgedrückt werden (und an der freien Außenseite des Dichtbandes sich sichtbar ansammeln), wohingegen aus Dispersion hergestellte Imprägniermittelfilme hierzu praktisch keine Tendenz zeigen und also auch langzeitstabil eine Abdichtung gewährleisten. Es versteht sich, dass das Austreten des Imprägniermittels ja auch aufgrund der weiteren Imprägniermittelbestandteile wie Flammschutzmittel usw. unerwünscht ist. So haben sich Dispersionen bei den erfindungsgemäßen Dichtbändern mit vergleichsweise geringen Luftdurchlässigkeiten überraschenderweise besonders bewährt. Insbesondere können die erfindungsgemäß eingesetzten Acrylatdispersionen - im Gegensatz zu chemischen Lösungen - einen Tyndall-Effekt aufweisen, beispielsweise auch bei Verwendung von sichtbarem Licht oder Licht mit einer Wellenlänge von bis zu 380 nm, bis zu 300 nm, bis zu 250-200 nm oder auch bis zu 100 nm. (Lediglich ergänzend sei festgehalten, dass auch nach der EP 1 600 571 A1 die Acrylatlösung zur verzögerten Rückstellung einen gewissen Feststoffgehalt einer Komponente mit einer Teilchengröße von maximal 0,1 mm aufweisen kann. Dieses bezieht sich hier jedoch auf anderweitige Partikel, wie beispielsweise Partikel von Flammschutzmitteln, welche also keine Klebekraft aufweisen und damit von sich aus keine Anhaftung an die Porenwände des Schaumstoffmaterials zeigen.)

Weiterhin hat sich gezeigt, dass die erfindungsgemäß zur verzögerten Rückstellung eingesetzten Acrylatdispersionen über vergleichsweise große Temperaturbereiche zuverlässig eine verzögerte Rückstellung bewirken, insbesondere auch ein Rückstellverhalten des Dichtbandes erzielt werden kann, welches sich gegenüber Bitumen über einen gewissen Temperaturbereich nur vergleichsweise wenig verändert, beispielsweise einer Temperatur ausgehend von 20°C oder 10°C als mittlerer Temperatur (der Temperaturbereich kann jeweils unabhängig voneinander ± 20°C, ± 10°C oder ± 5°C um die genannte mittlere Temperatur betragen). Dies ist möglicherweise auf die polaren Acrylatgruppen zurückzuführen, welche anscheinend zu einer verbesserten Kohäsion voneinander kontaktierenden Imprägniermittelfilmbereichen aneinander und/oder einer verbesserten Adhäsion gegenüber dem Schaumstoffmaterial führen. Zudem hat sich gezeigt, dass die Acrylatkomponente (Acrylatpolymerteilchen) der erfindungsgemäß eingesetzten Acrylatdispersionen praktisch nicht zu einer Migration oder Diffusion neigen, was darauf zurückgeführt wird, dass überraschenderweise die Acrylatpolymerteilchen in sich aber auch mit dem Polyurethan-Schaumstoffmaterial sehr große Kohäsions/Adhäsionskräfte aufweisen, so dass beispielsweise eine Diffusion oder Migration des Imprägniermittels in die angrenzenden Bauteil- bzw. Bauwerksoberflächen praktisch vollständig unterbleibt, dies auch bei höheren Temperaturen als 20°C (Raumtemp.), z.B. bei 30-40°C oder bei 50°C. Dies gilt insbesondere auch gegenüber Bitumen, Paraffin oder ähnlichen Stoffen.

Auch bei Verwendung von Bauwerksteilen wie Fensterprofilen mit empfindlichen Oberflächen, beispielsweise aus hellen oder weißen Kunststoffoberflächen, wird somit keine Beeinträchtigung der Bauteiloberflächen durch das Imprägniermittel festgestellt, auch nicht nach langen Anwendungszeiträumen wie ≥ 3-6 Monaten oder ≥ 12-24 Monaten oder 3-5 Jahre oder darüber hinaus. Dies ist von Bedeutung, um prinzipiell zu vermeiden, dass das Imprägniermittel auch an in die an dem Dichtband anliegenden Bauteiloberflächen oder gar in sichtbare Bereiche der Bauteile diffundiert oder migriert. Auch dann, wenn derartige Bauteile wie Fenster oder Türen nach längerer Benutzungszeit, insbesondere auch in heißen
Klimazonen, wieder ausgebaut werden, werden diese also nicht beeinträchtigt. Auch hierin besteht ein wesentlicher Aspekt der Erfindung.

Erfindungsgemäß weisen die Acrylatpolymerteilchen einen mittleren Durchmesser ≥ 5, bevorzugt ≥ 5-10 nm auf, vorzugsweise ≥ 25-50 nm oder ≥ 100-200 nm. Es hat sich herausgestellt, dass Acrylatpolymerteilchen mit einem geringen mittleren Durchmesser vergleichsweise geschlossenzellige Polyurethan-Schaumstoff besonders gut durchdringen können, um über den gesamten Querschnitt des Dichtbandes eine homogene Imprägnierung zu ergeben; dies anscheinend auch trotz der Klebekraft der Polymerteilchen, aufgrund welcher ein tieferes Eindringen in vergleichsweise geschlossenzellige Schaumstoffe nicht ohne weiteres zu erwarten ist, und zudem auch gute Imprägniermittelfilmeigenschaften in Bezug auf Bedingungen bei erhöhter Temperatur und Kompression des Dichtbandes bewirken, wie oben beschrieben. Es hat sich herausgestellt, dass derartige Imprägniermittel insbesondere zur Imprägnierung von Polyurethan-Schaumstoffen mit einer Luftdurchlässigkeit bis zu 75-100 l/m²s, insbesondere bis zu 40-50 l/m²s oder bis zu 25-30 l/m²s geeignet sind. Andererseits hat es sich herausgestellt, dass für bestimmte Anwendungsfälle die Acrylatpolymerteilchen auch einen mittleren Durchmesser von ≥ 500-750 nm oder ≥ 1-5 µm oder ≥ 10-25 µm aufweisen können, insbesondere verwendet als Imprägniermittel für Polyurethan-Schaumstoffe mit einer Luftdurchlässigkeit von bis zu 100-125 l/m²s oder bis zu 150 l/m²s. Erfindungsgemäß weisen die Acrylatpolymerteilchen einen mittleren Durchmesser von ≤ 150 µm auf. Als besonders bevorzugt hat es sich herausgestellt, wenn die Acrylatpolymerteilchen einen mittleren Durchmesser von ≤ 100 -150 µm oder ≤ 50-75 um, vorzugsweise ≤ 10-20 µm oder auch besonders bevorzugt ≤ 3-5 µm aufweisen, da mit derartigen Imprägniermitteln auch vergleichsweise geschlossenporige Polyurethan-Schaumstoffe besonders einfach homogen über deren Querschnitt imprägnierbar sind. Dies kann insbesondere für Schaumstoffe mit Luftdurchlässigkeiten ≤ 100-150 l/m²s oder ≤ 50-75 l/m²s, insbesondere bei Luftdurchlässigkeiten von ≤ 30-40 l/m²s gelten, ohne jedoch hierauf beschränkt zu sein.

Insgesamt liegt der mittlere Durchmesser der Acrylatpolymerteilchen somit vorzugsweise im Bereich von 5 nm bis 100 um oder insbesondere 50 nm bis 50 um, besonders bevorzugt im Bereich von 100 nm bis 10 um. Die übrigen im Rahmen der Erfindung genannten (besonders) bevorzugten oberen und/oder unteren Grenzwerte des mittleren Teilchendurchmessers verstehen sich insbesondere auch als bevorzugte Beschränkungen für jeden der drei hier angegebenen bevorzugten Bereiche. Allgemein im Rahmen der Erfindung bezieht sich die Angabe der Luftdurchlässigkeit auf eine Bestimmung unter den Normbedingungen eines 10 mm dicken Schaumstückes (vollständig entspannt) bei einem Mess-Unterdruck von 0,5 mbar, Prüffläche 100cm2; Frank-Gerät 21443; DIN EN ISO 9237.

Vorzugsweise enthält das Acrylatpolymer ≤ 40-50 Gew.-% oder ≤ 20-30 Gew.-% an ionischen Polymeren, besonders bevorzugt ≤ 10-15 Gew.-% oder ≤ 3-5 Gew.-% an ionischen Polymeren oder praktisch keine. Die ionischen Polymere können bspw. kationische Polymere, ggf. auch anionische Polymere oder zwitterionische Polymere sein. Die oben genannten Gehalte (Gew.-%) an ionischen Polymeren bezieht sich vorzugsweise auf den Gesamtgehalt an ionischen Polymeren. Gegebenenfalls können sich diese Gehalte im speziellen jeweils auch auf den Gehalt an kationischen Polymeren beziehen. Die ionischen Gruppen können insbesondere Seitengruppen der Polymere sein. Die jeweiligen Gegenionen können solche sein, wie sie auf dem Gebiet der jeweiligen Polymere, insbesondere Acrylate, bekannt sind, insbesondere Alkalimetall- oder Ammoniumionen. Durch den geringen Anteil an ionischen Polymeren lassen sich die imprägnierten Dichtbänder geringer Luftdurchlässigkeit leichter herstellen, was auf eine leichtere Verflüchtigung von Wasser aus der Porenstruktur zurückgeführt wird und weisen eine geringere Wasseraufnahme bei Beaufschlagung mit Feuchtigkeit auf, als bei höheren Anteilen an ionischen Polymeren. Trotz des geringen Luftwiderstandes der Schaumstoffe können diese mit derartigen Polymeren homogen imprägniert werden.

Als besonders vorteilhaft hat es sich erwiesen, wenn die Dispersion Acrylatpolymerteilchen mit einem mittleren Durchmesser von > 150 um zu einem Anteil von weniger als 10 Gew.-%, vorzugsweise weniger als 2-5 Gew.-% oder weniger als 0,5-1 Gew.-% aufweist. Es hat sich herausgestellt, dass Acrylatpolymerteilchen derartiger Teilchengröße eine durchgehend homogene Imprägnierung eines vergleichsweise geschlossenzelligen Polyurethan-Schaumstoffes unter Umständen signifikant behindern können, auch wenn die mittlere Porengröße des Schaumstoffmaterials größer als der genannte mittlere Durchmesser der Polymerteilchen ist. Dies wird auf die Klebekraft der Polymerteilchen zurückgeführt, welche an den Porenwänden anhaften und diese somit zumindest teilweise verschließen können. Dies kann anscheinend das Eindringen weiterer Teilchen behindern, so dass die Poren insgesamt verstopfen, auch wenn der Teilchendurchmesser kleiner als die Weite der Porenübergänge ist. Besonders bevorzugt weist das Imprägniermittel Acrylatpolymerteilchen mit einem mittleren Durchmesser von > 100 µm mit einem Anteil von ≤ 5-10 Gew.-% oder ≤ 1-3 Gew.-% auf. Besonders bevorzugt weist die Dispersion Acrylatpolymerteilchen mit einem mittleren Durchmesser von > 75 µm zu einem Anteil von ≤ 5-10 Gew.-% oder ≤ 1-3 Gew.-% auf. Die Gewichtsangabe bezieht sich hierbei allgemein auf das Gesamtgewicht der Acrylatpolymerteilchen des Imprägniermittels.

Ferner kann das in der Dispersion eingesetzte Polyacrylat ein vernetztes Polymer sein oder enthalten. Hierdurch können das Fließverhalten des Imprägniermittelfilmes (wie oben beschrieben) und/oder die Klebkraft sowie Adhäsion des Filmes an den Porenwänden eingestellt werden. Die Vernetzung kann durch Knüpfung von C-C-Bindungen erfolgen, beispielsweise über ungesättigte C-C Bindungen innerhalb des Polymergerüstes, und/oder durch Vernetzung der Estergruppen, bzw. durch mehrwertige, überbrückende Alkohole. Der Vernetzungsgrad kann im Mittel ≥ 0,25-1 oder ≥ 5-10 Vernetzungsstellen auf 1000 Acrylsäureeinheiten des Polymers betragen, gegebenenfalls ≥ 10-25 oder ≥ 50-100 Vernetzungsstellen oder auch bis zu 200 Vernetzungsstellen oder darüber hinaus. Der Vernetzungsgrad kann ≤ 200-250 oder ≤ 20-100 Vernetzungsstellen je 1000 Acrylsäureeinheiten des Polymers betragen, ohne hierauf beschränkt zu sein. Es hat sich herausgestellt, dass eine Vernetzung der Polymere vorteilhaft aber nicht zwingend ist, insbesondere auch in Hinblick auf die vorteilhaften Fließeigenschaften der erfindungsgemäßen Imprägniermittel/Klebemittelfilme gegenüber aus Lösung erzeugten Filmen, was möglicherweise auf die unterschiedlichen Filmbildungsmechanismen zurückzuführen ist.

Es hat sich im Zuge der Erfindung überraschenderweise herausgestellt, dass mittels des im Rahmen der Erfindung beschriebenen Imprägniermittels auch vergleichsweise geschlossenporige Polyurethan-Schaumstoffe homogen zur verzögerten Rückstellung imprägnierbar sind, insbesondere auch Schaumstoffe mit einer Luftdurchlässigkeit von ≤ 75-100 l/m²s oder ≤ 40-50 l/ m²s oder ≤ 25-30 l/m²s, gegebenenfalls auch ≤ 20-22 l/m²s oder ≤ 15-18 l/m²s oder im Besonderen mit einer Luftdurchlässigkeit im Bereich von 10-40 l/m²s, welche jeweils von der Erfindung mit umfasst sind.

Es hat sich im Zuge der Erfindung ferner herausgestellt, dass durch die Verwendung der Acrylatdispersionen vergleichsweise geschlossenzellige Schaumstoffe mit in weiten Bereichen an die jeweiligen Anforderungen angepasster Rückstellung, gegebenenfalls auch eine stark verzögerte Rückstellung, bereitstellbar sind. Dies wird unter anderem auf die Klebekraft der durch die Acrylatdispersionen nach Trocknung des Dichtbandes resultierenden Klebemittelschichten an den Porenwänden des Schaumstoffes zurückgeführt.

Das eingesetzte Imprägniermittel kann ferner durch die Klebekraft eines durch Trocknung der Acrylatdispersion hergestellten Klebemittelfilmes beschrieben werden. Der Klebemittelfilm wird durch Ausbringung der Dispersion und Trocknung derselben erhalten, beispielsweise bei 50-75°C bei bewegter Luft bis zur Gewichtskonstanz. Ein derartiger Film kann eine Schäladhäsion (Klebkraft) auf Stahl von mindestens 0,04 bis 0,1 N/25mm oder mindestens 0,2 bis 0,4 N/25mm bei 23°C/50% relativer Luftfeuchtigkeit aufweisen, ermittelt in einer Prüfung in Anlehnung an DIN EN 1939: 2003(D), Verfahren 3 (Tabelle 1), wobei in Abweichung hierzu der Klebefilm durch eine 5 kg schwere Rolle angedrückt und eine Wartezeit zwischen Applikation und Prüfung von 10 Minuten eingehalten wird. Die eingesetzte Klebeschicht ist 25 mm breit und 300 mm lang. Die Abschälung erfolgt in einer Richtung senkrecht zu der Breite des Klebebandes. Der Abziehwinkel, wie in DIN EN 1939: 2003(D) definiert, beträgt 180°C. Die Abzugsgeschwindigkeit beträgt 300mm/Minute. Vorzugsweise weist die Schäladhäsion des Klebemittels unter den genannten Bedingungen ≥ 0,6 bis 1 N/25mm auf (die Klebkraft wird in Abweichung zu der DIN bezogen auf eine Breite 25 mm angeben). Hierdurch wird eine ausreichende Klebemittelwirkung und damit auch Rückstellverzögerung des komprimierten Dichtbandes erzielt. Zu höheren Werten hin sind keine besonderen Beschränkungen gegeben, diese ergeben sich aus den Eigenschaften der eingesetzten Polymerteilchen, ggf. kann die Schäladhäsion (Klebkraft) ≤ 15-20 N/25mm betragen, ggf. ≤ 5-10 N/25mm oder auch ≤ 20-30 N/25mm. Das Acrylatpolymer-Imprägniermittel kann ein mittleres Molekulargewicht von ≥ 1.000, vorzugsweise ≥ 1.500-2.000 oder ≥ 2.500-5.000 aufweisen, gegebenenfalls auch ≥ 10.000-20.000, unter Umständen auch ≥ 50.000-100.000 oder darüber hinaus, jeweils bezogen auf die Anzahl der monomeren Einheiten. Das mittlere Molekulargewicht des eingesetzten Acrylatpolymers kann beispielsweise ≤ 5.000.000-10.000.000 oder ≤ 1.000.000-2.000.000 betragen, gegebenenfalls auch ≤ 250.000-500.000 oder ≤ 100.000. Es hat sich herausgestellt, dass dann einerseits die Acrylatpolymerteilchen eine ausreichende Klebekraft aufweisen, um eine verzögerte Rückstellung zu bewirken, andererseits die Acrylatpolymerteilchen bei nicht zu hohen Molekulargewichten auch gute Filmbildungseigenschaften aufweisen, so dass also beim Trocken die Polymerteilchen untereinander gut vernetzen und "zusammenlaufen" können.

Das eingesetzte Acrylatpolymer kann ein Polymer enthaltend Acrylsäureester und/oder Methacrylsäureester und/oder Acrylsäureamide und/oder Methacrylsäureamide sein, im speziellen Acrylsäureester und/oder Methacrylsäureester. Unter dem Begriff "Acrylsäure" sei im Rahmen der Erfindung im allgemeinen Methacrylsäure mit umfasst, im speziellen engeren Sinn jedoch ausdrücklich auch Acrylsäure als solche verstanden, so dass die "Acrylate" dann Acrylsäureester und -amide darstellen, worauf jeweils ausdrücklich Bezug genommen sei. Als Ester- bzw. Amidkomponenten können insbesondere aliphatische Alkohole oder Amide vorliegen, ohne auf diese beschränkt zu sein, beispielsweise jeweils solche mit C1 bis C10, insbesondere C1 bis C4, ohne hierauf beschränkt zu sein.

Als besonders bevorzugt hat es sich erwiesen, wenn das Acrylatpolymer ein Copolymer ist. Hierdurch kann die Klebekraft der Polymerteilchen an die im Rahmen der Erfindung vorliegenden besonderen Bedingungen speziell angepasst werden, einerseits in Bezug auf die zur verzögerten Rückstellung erforderliche Klebekraft, andererseits in Bezug auf Adhäsionskräfte der in der Dispersion vorliegenden Teilchen in Bezug auf die Wandungen der Porenstruktur bei der Einbringung der Dispersion in die Schaumstoffstruktur und/oder die Filmbildungseigenschaften der Polymerteilchen beim Trocknen des imprägnierten Dichtbandes, welche sich für eine gleichmäßige Rückstellung über Querschnitt und Länge des Dichtbandes als wichtig herausgestellt haben. Es hat sich als günstig erwiesen, wenn die Copolymer-Komponenten ausgewählt sind aus der Gruppe Butadien, Vinylverbindungen, Alkylen- insbesondere Polyethylenverbindungen, substituierte (insbesondere alkylierte) Butadiengruppen, Styrol, Urethane, Polyether oder Kombinationen derselben. Hierbei können statistische Copolymere aus Acrylat/Metacrylat-Einheiten mit einem oder mehreren anderen Copolymeren, insbesondere Butadien- und/ oder Styrol-Copolymeren, vorliegen (z.B. als Styrol-Butadien -Coplymere) oder aber Blockpolymere mit Acrylat/ Metacrylat-Blockeinheiten in Kombination mit Blockeinheiten mit einem oder mehreren der anderen Copolymeren. Vorzugsweise enthalten diese Copolymere ≥ 10-30 Gew.-% oder ≥ 50-60 Gew.-%, vorzugsweise ≥ 70-80 Gew.-% oder ≥ 90-95 Gew.-% Acrylat/ Methacrylat Monomereneinheiten. Die Acrylate-Copolymere können ≥ 2-5 Gew.-% oder ≥ 10-15 Gew.-%, gegebenenfalls auch ≥ 20-30 Gew.-% oder ≥ 40-50 Gew.-% andere Copolymere als Acrylat/Methacrylat enthalten, vorzugsweise ≤ 40-50 Gew.-% oder ≤ 60-70 Gew.-% oder ≤ 80-90 Gew.-% derselben. Die genannten Copolymerteilchen können einen Gewichtsanteil von ≥ 5-10 Gew.-% oder ≥ 20-30 Gew.-%, gegebenenfalls ≥ 50-75 Gew.-% an dem Gesamtgewicht der Polymerteilchen der Dispersion (also Trockengewicht polymere Bestandteile) ausmachen, vorzugsweise ≤ 50-75 Gew.-% oder ≤ 85-95 Gew.-% derselben.

Gegebenenfalls können die einzelnen Polymere auch nebeneinander vorliegen, entweder in denselben Partikeln (z.B. als Blends) oder in verschiedenen Partikeln als Mischungen. Gegebenenfalls kann das Imprägniermittel also auch andere Polymerteilchen, welche nicht Acrylate bzw. polymere Acrylate enthalten, umfassen. Derartige Nichtacrylatpolymere können beispielsweise Butadien- und/oder Styrol-haltige Polymere sein, insbesondere Polybutadien und/oder Polystyrol. Es versteht sich, dass an Stelle von Butadien allgemein in Bezug auf die genannten Polymere (also insbesondere auch Coplymere und/oder Blends mit anderen Polymeren) auch andere ungesättigte C-C-Bindungen (insbesondere im Grundgerüst) enthaltende Polymere, insbesondere Kautschuke oder Kautschuk-Copolymeranteile, enthalten sein können. Relativ oder zusätzlich kann das Imprägniermittel auch Polyurethanund/oder Polyether-Verbindungen enthalten, gegebenenfalls in Kombination mit Butadien-haltigen Polymeren oder alternativ oder in Kombination mit Styrol-haltigen Polymeren.

Nach einer bevorzugten Ausführungsform umfasst das Imprägniermittel Polymerteilchen, welche vollständig aus einem Polyacrylat/Polymethacrylat bestehen, gegebenenfalls in Kombination mit Polymerteilchen anderer Zusammensetzung. Das reine Polyacrylat kann hierbei ≥ 20-30 Gew.-% oder ≥ 40-60 Gew.-%, vorzugsweise ≥ 75-85 Gew.-%, besonders bevorzugt ≥ 90-95 Gew.-% oder zumindest ungefähr 100 Gew.-% der polymeren Bestandteile des Imprägniermittels ausmachen.

Die im Rahmen der Erfindung angegebenen Gewichtsanteile in Bezug auf die Zusammensetzung der Polymerteilchen des Imprägniermittels beziehen sich allgemein auf das Gesamtgewicht der organischen polymeren Bestandteile des Imprägniermittels (also Trockengewicht der polymeren Bestandteile).

Erfindungsgemäß liegt der Gewichtsanteil der Polymeranteile des Imprägniermittels in Bezug auf das Gewicht des Schaumstoffmaterials in einem Bereich von 20-275% (d.h. in Bezug auf 100% als Gewicht des reinen Schaumstoffmaterials ohne Füllstoffe etc.), vorzugsweise im Bereich von 25-200% oder 35-150%, besonders bevorzugt im Bereich von 50-150% oder 75-125%. Dies bezieht sich jeweils auf das einsatzfähige Dichtband, welches also bevorzugt in getrocknetem Zustand vorliegt. Es hat sich herausgestellt, dass bei Einsatz des Imprägniermittel mit einem derartigen Gewichtsverhältnis das Dichtband auch bei Verwendung von relativ geschlossenzelligen Schaumstoffmaterialien mit nur geringer Luftdurchlässigkeit einerseits fertigungstechnisch noch gut herstellbar ist, andererseits auch bei den im Rahmen der Erfindung eingesetzten Schaumstoffen eine den jeweiligen Erfordernissen angepasste Rückstellung erzielbar ist, insbesondere bevorzugt eine nicht zu schnelle Rückstellung, welche eine günstige Handhabung des Dichtbandes ermöglicht. Dies gilt insbesondere für die im Rahmen der Erfindung beanspruchten Luftdurchlässigkeiten des Schaumstoffmaterials. Der Imprägniermittelfilm des Dichtbades kann eine Schichtdicke von ≥ 5-10 µm oder ≥ 15 µm aufweisen, die Schichtdicke kann ≤ 125-150 µm oder ≤ 75-100 µm betragen. Vorzugsweise liegt die Schichtdicke des Imprägniermittelfilmes im Bereich von 5-150 µm oder 10-100 µm, besonders bevorzugt im Bereich von 15-50 µm, bspw. bei ca. 30 µm.

Weiterhin können Füllstoffe wie Flammschutzmittel, Mittel zur Einstellung der Wärmeleitfähigkeit des Dichtbandes etc., vorzugsweise mineralische Füllstoffe einschließlich Graphit, in Bezug auf das Gewicht des Schaumstoffmaterials in einem Anteil von 25-500% (d.h. in Bezug auf 100% als Gewicht des reinen Schaumstoffmaterials ohne polymeren Imprägniermittel etc.) eingesetzt werden, vorzugsweise im Bereich von 50-350% oder 70-250%, besonders bevorzugt im Bereich von 75-200% desselben. Es hat sich herausgestellt, dass hierdurch das Rückstellverhalten des Dichtbandes trotz der ansonsten für dieses nicht förderlichen Füllstoffe, immer noch im Wesentlichen durch das Imprägniermittel bestimmt und nicht übermäßig beeinträchtigt wird.

Das Imprägniermittel ist vorzugsweise derart ausgebildet, dass ein hieraus gebildeter (getrockneter) Imprägniermittelfilm (also auch umfassend etwaige Füllstoffe; Hilfsstoffe und dgl) eine Zugfestigkeit von ≥ 0,001 N/mm² aufweist, gegebenenfalls von ≥ 0,002-0,005 N/mm² oder ≥ 0,01 N/mm².

Die Zugfestigkeit des Imprägniermittelfilmes kann bis hin zu 0,15-0,2 N/mm² betragen, gegebenenfalls aber nicht bevorzugt bis zu 0,5-1 N/mm² oder in besonderen Anwendungsfällen bis zu 2-5 N/mm² oder darüber hinaus betragen. Die Zugfestigkeit kann also im allgemeinen im Bereich von 0,001 N/mm² bis 3 N/mm² liegen, vorzugsweise im Bereich von 0,01 N/mm² bis 1,0 N/mm². Der getrocknete Imprägniermittelfilm kann eine Reißdehnung von ≥ 50-100% oder ≥ 250-500% oder mehr aufweisen, beispielsweise bis zu 1000-1250% oder bis zu 1500% oder ggf. auch darüber hinaus. Die Reißdehnung kann also im Bereich von 50-1500% liegen.

Der getrocknete Klebmittelfilm (polymere Bestandteile des Imprägniermittels, ohne Füllstoffe) kann eine Reißdehnung von ≥ 100-250% oder ≥ 500-1000% oder mehr aufweisen, beispielsweise ≥ 1500 %. Die Reißdehnung beispielsweise bis hin zu 500-1000% oder bis zu 2000-4000% oder bis zu 6000% oder mehr betragen. Die Reißdehnung kann also im Bereich von 100-6000% liegen. Die genannten Werte von Zugfestigkeit und Reißdehnung beziehen sich jeweils auf eine Probe mit 5 mm Breite und 1 mm Dicke und eine Messung nach DIN EN 12311-2/Verfahren B (Dez. 2000), was allgemein im Rahmen der Erfindung gilt.

Es hat sich herausgestellt, dass derartige Polymere, welche die disperse Phase der Dispersion bilden, ein günstiges Rückstellverhalten bei den im Rahmen der Erfindung eingesetzten Schaumstoffen angesichts der besonderen Porenstrukturen derselben bewirken. Es hat sich gezeigt, dass bei vergleichsweise stark geschlossenzelligen Schaumstoffen eine zu hohe Zugfestigkeit und Reißdehnung des Polymerfilms nicht bevorzugt ist, da dies die Rückstellung zu stark verzögern kann. Der Film aus den polymeren Bestandteile des Imprägniermittels, beispielsweise durch Trocknung bei 50-75°C oder 80-90°C bei bewegter Luft zur Gewichtskonstanz erzeugt werden.

Der getrocknete Imprägniermittelfilm bzw. Klebmittelfilm, welcher insbesondere zur Bestimmung der Zugfestigkeit und Reißdehnung herangezogen wird, kann jeweils z.B. durch Trocknung von beispielsweise auf einer Unterlage wie Silikonpapier streifenartig aufgetragenem Imprägniermittel erzeugt werden, beispielsweise bei Trocknung bei 50-75°C bei bewegter Luft. Er kann für eine Handhabung dann in einer beispielsweise Zugkraft-Prüfmaschine in geeigneter Dicke, beispielsweise 1 bis 3 mm Dicke, und geeigneter Breite, beispielsweise 5 bis 30 mm Breite, ausgebildet werden, bezogen auf den Prüfbereich. Der Prüfkörper kann hierbei als "Knochen" ausgebildet sein, d.h. mit verbreiterten Endbereichen, in Anlehnung an DIN EN 1798.

Als besonders bevorzugt hat es sich erwiesen, wenn der Klebmittelfilm (Film der polymeren Bestandteile des Imprägniermittels, trockener Zustand) eine Zugfestigkeit von 0,005 bis 5 N/mm2 oder von 0,01 bis 2 N/mm2, beispielsweise bis 1-2 N/mm2 oder bis 0,5 N/mm2 hat, wenn die Glasübergangstemperatur Tg im Bereich von -70 bis -45°C liegt. Vorzugsweise weist der Klebmittelfilm eine Zugfestigkeit von 0,05 bis 1,0 N/mm2, dies gilt insbesondere für Imprägniermittel mit einer Glasübergangstemperatur Tg im Bereich von -45°C bis 0°C oder bis 10°C oder im Bereich von -40°C bis -10°C. Durch die genannte Kombination von Glasübergangstemperatur und Zugfestigkeit des Klebmittelfilmes lassen sich einerseits Dichtelemente bereitstellen, welche einerseits bei 10°-30°C, insbesondere ca. 20°C, eine ausreichend schnelle Rückstellung aufweisen (Variante I). Andererseits lassen sich Dichtelemente herstellen, welche bei Temperaturen von ≥ 40°C unter zusätzlicher Wärmeeinwirkung eine ausreichend schnelle Rückstellung aufweisen - aber bei Raumtemperatur oder im Bereich von 10-30°C (ohne zusätzliche Wärmeeinbringung) keine oder praktisch keine Rückstellung- (Variante II), wobei in Kombination mit den Zugfestigkeiten die Rückstellung unter zusätzlicher Wärmeeinwirkung ausreichend beschleunigt wird, um ein einfach handhabbares, gezielt durch Wärmeeinwirkung rückstellbares Dichtband bereitstellen zu können. Die Wärmeeinbringung kann durch eine externe oder eine interne Heizquelle des Dichtbandes wie z.B. integrierte Heizdrähte oder -bänder erfolgen.

Weist das Klebmittel eine hohe Glasübergangstemperatur auf, so ist für eine selbsttätige Rückstellung oft eine Erwärmung des Dichtelementes auf 30°C oder mehr zweckmäßig, beispielsweise auf Erwärmung auf 40°C oder 50°C, gegebenenfalls auch auf 60°C, 70°C oder 80°C, zweckmäßigerweise nicht oberhalb 100-120°C.

Der aus dem eingesetzten Klebemittel gebildete Film ist somit bevorzugt hinsichtlich der polymeren Bestandteile bei Raumtemperatur amorph oder teilkristallin. Unterhalb der Glasübergangstemperatur ist das Mittel zumindest sehr zähfließend oder nahezu fest oder fest. Oberhalb der Glasübergangstemperatur ergibt sich eine rasche Abnahme der Zähigkeit und eine rasche Abnahme der Viskosität. Dies führt dazu, dass die Rückstellkräfte des Schaumstoffes die auf die Zellwände wirkenden Zusammenhaltungskräfte des Imprägnats überwinden können, und der Schaumstoff beginnen kann, sich zurückzustellen.

Die Glasübergangstemperatur kann im Rahmen der Erfindung auf verschiedene Weisen bestimmt werden. Beispielsweise über dilatomerische, dielektrische, dynamisch-mechanische oder refraktometrische Messungen, beispielsweise mit Hilfe der NMR-Spekroskopie. Insbesondere ist im Rahmen vorliegender Anmeldung bevorzugt, die genannten Glasübergangstemperaturen durch eine Methode zu bestimmen, wie sie als ASTM-Standard bekannt ist (Designation: D1356-03). Es kann auch das ISO-Standardverfahren benutzt werden, welches die Bestimmung mit Hilfe von differenziellem kalorischen Scanning (DSC) vornimmt, insbesondere DIN EN ISO 11357-1 (Bestimmung mit Wärmestrom-Differenz-Kalorimeter; einfache Kalibrierung). Bei Ungenauigkeiten ist im Zweifelsfall jedenfalls die Messung nach dem ISO-Standardverfahren zurechenbar. Es versteht sich, dass die Glasübergangstemperatur an dem Feststoffanteil des Klebmittels bestimmt ist. Dieser kann durch Trocknung und Entfernung der Lösungsmittelanteile des Klebmittels erhalten werden.

Das erfindungsgemäße Dichtband im vollexpandierten Zustand kann eine Höhe und/oder Breite (vorzugsweise Höhe und Breite) von ≥ 0,8-1 cm oder ≥ 1,2-1,5 cm aufweisen, vorzugsweise eine Höhe und/oder Breite ≥ 2-2,5 cm. Derartige Dichtbänder sind in Kombination mit anderen Dichtmaterialien, insbesondere auch anderen Dichtbändern aus Schaumstoffmaterial zur Fugenabdichtung vielfältig einsetzbar. Überraschenderweise hat sich herausgestellt, dass das erfindungsgemäße Dichtband auch mit einer Höhe von ≥ 3-3,5 cm, insbesondere auch ≥ 4-4,5 cm bereitgestellt werden kann. Die Dichtbandbreite und/ oder Höhe kann ohne weiteres bis zu 15 oder bis zu 20 cm oder darüber hinaus betragen. Die Dichtbandhöhe ist hierbei die Richtung der Querschnittserstreckung desselben, welche sich über die Fugenbreite bei dem in der Fuge angeordneten Dichtband erstreckt, also beispielsweise zwischen Bauteil I und Bauteil II, beispielsweise zwischen einem Rahmenprofil wie einem Fenster- oder Türrahmen und der Mauerwerkslaibung. Die obigen Werte der Dichtbandhöhe beziehen sich jedoch auf das Dichtband im vollständig frei entspannten Zustand (außerhalb der Fuge). Oftmals weist ein erfindungsgemäßes Dichtband ein Befestigungsmittel zur Halterung oder Anhaftung des Dichtbandes an einem Bauteil wie einem Rahmenbauteil auf. Das Befestigungsmittel kann z.B. stoffschlüssig wirken, beispielsweise in Form einer Selbstklebemittelschicht, oder kraft- oder formschlüssig, beispielsweise durch ein an dem Schaumstoffkörper des Dichtbandes angebrachtes Halteprofil wie eine Kunststoffleiste oder einen Hartschaumstoffkörper. Diese Dichtbandseite ist dann somit eine der beiden die Dichtbandhöhe begrenzenden Seiten. Alternativ oder zusätzlich kann das Dichtband an einer quer zur Längsrichtung verlaufenden Seitenfläche eine Profilierung aufweisen, sodass durch Anordnung des zurückgestellten Dichtbandes in einer Fuge Dichtbandbereiche unterschiedlicher Kompression entstehen, welche dann vorzugsweise der Herstellung eines Gefälles des Wasserdampfdiffusions-Widerstandes dienen. Eine derartige profilierte Fläche kann dann ebenfalls eine die Höhe des Dichtbandes begrenzende Seitenfläche darstellen.

Überraschenderweise wurde im Zuge der Erfindung festgestellt, dass die im Rahmen der Erfindung eingesetzten vergleichsweise geschlossenporigen Dichtbänder, insbesondere auch solche mit einer Luftdurchlässigkeit von ≤ 100-125 1/m²s oder ≤ 50-75 l/m²s, im speziellen auch ≤ 30-40 l/m²s, homogen mit dem Imprägniermittel durchsetzt hergestellt werden können, auch wenn diese eine Höhe von ≥ 2,5-3 cm oder insbesondere auch ≥ 3,25-3,5 cm oder ≥ 4-4,5 cm aufweisen. Derartige Dichtbänder können insbesondere durch Tränkung mit dem Imprägniermittel hergestellt werden, wobei überraschenderweise das Imprägniermittel auch über eine derart große Höhe des Dichtbandes homogen in dieses eindringt.

Die Erfindung umfasst somit ein Verfahren zur Herstellung gattungsgemäßer Dichtbänder, bei welchem zur Rückstellimprägnierung in einer kontinuierlichen Phase, insbesondere wässrigen Phase, dispergierte Acrylatpolymerteilchen auf die Porenwände und Stege des das Dichtband bildenden Schaumstoffkörpers aufgebracht werden, um gegebenenfalls nach Trocknung einen Imprägniermittelfilm zu bilden. Ferner umfasst die Erfindung ein derart hergestelltes Dichtband.

Im speziellen sind erfindungsgemäße Dichtbänder vorteilhaft durch Kompression und Tauchimprägnierung herstellbar, wobei ggf. auch andere Verfahrens einsetzbar sein können. Hierzu wird vorzugsweise der unterhalb des Imgrägniermittelniveaus befindliche Schaumstoffbandabschnitt in einen komprimierten Zustand überführt. Das Imprägniermittel wird hierbei vorzugsweise in Form eines Bades bereitgestellt. Die Zuführung des Bandes zum Imprägnierbad kann durch eine geeignete Zuführeinrichtung erfolgen, z.B. mittels eines Walzenstuhls. Die Imprägnierung kann dann dadurch erfolgen, dass ein in das Imprägnierbad eingebrachter und sich im komprimierten Zustand befindender Schaumstoffbbandabschnitt in dem Imprägnierbad unterhalb des Imprägnatniveaus entspannt (vorzugsweise vollständig entspannt) wird, und dadurch Imprägniermittel aufsaugt. Die Komprimierung kann durch einen Walzenstuhl mit mindestens einem sich unterhalb des Imprägnatniveaus befindlichen Walzenpaares erfolgen. Die Entspannung kann durch Rückstellung des Dichtbandes nach Druckentlastung desselben selbstständig erfolgen, bspw. durch Entspannung beim Verlassen des Walzenstuhls. Bei dieser Entspannung bzw. Rückstellung des Schaumstoffbandes unter Volumenerweiterung dringt dann das Imprägniermittel in das Innere des Schaumstoffs ein, der Schaumstoffkörper saugt somit das Imprägniermittel auf. Gegebenenfalls kann überschüssiges aufgenommenes Imprägniermittel in einem nachfolgenden Schritt entfernt werden, z.B. durch geeignete Kompression des Schaumstoffbandes außerhalb des Imprägniermittelreservoirs, bspw. ebenfalls durch einen zu durchlaufenden Walzenstuhl. Hierdurch kann eine homogene Imprägnierung des vergleichsweise geschlossenporigen Schaumstoffmaterials über dessen gesamten Querschnitt erfolgen, was überraschend ist, da nicht vorhersehbar war, dass die eine Klebekraft aufweisenden Polymerteilchen des Imprägniermittels derart weit und homogen in das vergleichsweise geschlossenporige Schaumstoffmaterial eindringen können, und allein hierdurch dieses über dessen gesamten Querschnitt homogen imprägnieren können.

Die Erfindung umfasst daher auch ein Verfahren zur Herstellung eines erfindungsgemäßen Dichtbandes durch Eintauchen desselben in ein Imprägniermittel, Kompression des Schaumstoffs (während des Eintauchens desselben in das Imprägniermittel), Entspannen des in das Imprägniermittel eintauchenden Schaumstoffs, sodass dieses durchgehend und homogen mit dem Imprägniermittel getränkt wird, und gegebenenfalls nachfolgende Trocknung des Dichtbandes. Vor der Trocknung des Dichtbandes kann dieses teilweise wieder komprimiert werden, um gegebenenfalls überschüssiges Imprägniermittel herauszudrücken bzw. die von dem Dichtband aufgenommene Imprägniermittelmenge einzustellen.

Das erfindungsgemäße Dichtband (also gebrauchsfertig mit Imprägniermittel versehen, getrocknet und frei expandiert) weist eine Luftdurchlässigkeit von höchstens 150 l/m²s, insbesondere auch von ≤ 100 l/m²s oder gar ≤ 50 l/m²s auf, gegebenenfalls auch ≤ 40 1/m²s oder ≤ 25 l/m²s. Auf die oben angegebenen Messbedingungen mit Frank-Prüfgerät sei verwiesen.

Bei Verwendung einer Acrylatdispersion hat sich herausgestellt, dass auch bei niedrigeren Temperaturen, beispielsweise bei 0°C/50% relativer Luftfeuchtigkeit eine für die Handhabung des Dichtbandes günstigere Rückstellverzögerung erreicht werden kann. Insbesondere in Kombination mit den oben genannten Werten bei 20°C, aber auch unabhängig hiervon, kann bei 0°C eine Rückstellung des Dichtbandes von ≥ 12-24 h oder ≥ 36-48 h erfolgen, vorzugsweise ≤ 120-180 h oder ≤ 96 h.

Die genannten Angaben in Bezug auf das Rückstellverhalten des erfindungsgemäßen Dichtbandes beziehen sich jeweils auf eine Kompression des Dichtbandes auf 15% dessen Volumens (bzw. Höhe)gegenüber dem vollständig expandierten Dichtband und auf eine vollständige Rückstellung des Dichtbandes in seinen vollständig zurückgestellten Zustand. Es versteht sich, dass sich die vollständige Rückstellung auf das freie, nicht in einer Fuge angeordnete Dichtband bezieht. Die Kompression des Dichtbandes ist hier und auch im allgemeinen im Rahmen der Erfindung, wie beispielsweise auch in Bezug das Ausblutungsverhhalten und die Herstellung des Dichtungsbandes durch Tauchimprägnierung, jeweils insbesondere als Kompression in der Höhe verstanden (als Abstand Breitseite-Breitseite), also entsprechend der Kompression des Dichtbandes in Einbausituation, sofern sich aus dem Zusammenhang im Einzelnen nichts anderes ergibt. Dies bezieht sich jeweils insbesondere auf den Bezugspunkt der Kompression auf 15% des Volumens (bzw. Höhe) des Dichtbandes gegenüber dem Ausgangsvolumen bei vollständig frei entspanntem Dichtband, aber nicht nur hierauf.

Als zweckmäßig hat es sich erwiesen, wenn das Polyurethan-Schaumstoffmaterial ein Polyadditionsprodukt aus einem oder mehreren Isocyanaten und einem oder mehreren PolyetherPolyolen ist oder alternativ einem oder mehreren PolyesterPolyolen. Hierdurch kann eine geeignete Rückstellung des Bandes erzielt werden, insbesondere können Acrylatpolymerpartikel an einem derartigen Schaumstoff gut anhaften, um eine verzögerte Rückstellung zu bewirken.

Weiterhin umfasst die Erfindung ein in einer Fuge angeordnetes komprimiertes Dichtband. Das Dichtband kann hierbei auf 10-50% seines Volumens bzw. Höhe bei vollständiger Rückstellung komprimiert sein, insbesondere auf 20-40% oder ca. 30% des Volumens (bzw. jeweils Höhe). Hierdurch ist eine gute Fugenabdichtung bei ausreichender Andruckkraft des Dichtbandes an die Fugenflanken gegeben.

Weiterhin von der Erfindung umfasst ist ein Bauwerk mit mindestens zwei zwischen sich eine Fuge ausbildenden Bauteilen, in welcher ein erfindungsgemäßes Dichtband angeordnet ist, vorzugsweise in einem die Fuge abdichtenden Zustand. Insbesondere kann hierbei eines der Bauteile ein Rahmenbauteil wie ein Fenster- oder Türrahmen sein, welcher in eine durch das andere Bauteil (oder Bauteile) ausgebildete Mauerwerksöffnung eingesetzt ist. Dies gilt auch für Fassadenfugen, z.B. zwischen Beton- oder Klinkerelementen.

Die Erfindung wird nachfolgend anhand von Ausführungsbeispielen beispielhaft erläutert.

Nach einem ersten Ausführungsbeispiel der Erfindung liegt ein Dichtband aus einem weichen Polyurethan-Schaumstoffmaterial vor ("weich" heißt allgemein im Rahmen der Erfindung zerstörungsfrei kompressibel und rückstellbar), welches eine Luftdurchlässigkeit von ≤ 50 1/m²s aufweist, genauer gesagt ca. 40 l/m²s. Dieses Dichtband kann einen rechteckigen oder trapezförmigen Querschnitt aufweisen, eine oder mehrere der Begrenzungsflächen des Dichtbandes können auch strukturiert sein, beispielsweise in Form eines zu einer der Seitenflächen des Dichtbandes hin ansteigenden Profillinie, bspw. wie in der DE 10 2008 020 955 A1 oder EP 1 811 111 A1 beschrieben, was allgemein im Rahmen der Erfindung gelten kann. Der Dichtbandkorpus bestehend aus dem Schaumstoffmaterial weist hierbei zwei gegenüberliegende "Breitseiten" auf, deren maximaler Abstand die Höhe des Dichtbandes definiert und zwei gegenüberliegende Schmalseiten. Zumeist ist der Abstand der Breitseiten des frei vollständig expandierten Dichtbandes größer als der Abstand der Schmalseiten des Dichtbandes (also die Dichtbandhöhe größer als dessen Breite), was jedoch nicht zwingend notwendig ist. Die beiden Breitseiten sind an die die Fuge, in welche das Dichtband zur Abdichtung einzubringen ist, anlegbar, bzw. liegen bei abdichtendem Dichtband an den Fugenbegrenzungen an. Gegebenenfalls können an einer oder beiden Breitseiten des Schaumstoffkörpers Befestigungsmittel zur Festlegung oder Anhaftung des Dichtbandes an einem anderen Bauteil wie einem Rahmenbauteil oder einem die Fuge begrenzenden Bauteil wie einem Mauerwerksbereich vorgesehen sein, beispielsweise in Form einer Klebemittelschicht oder eines Befestigungsstreifens.

Der Polyurethan-Schaumstoffkörper des Dichtbandes ist mit einem Imprägniermittel zur verzögerten Rückstellung desselben imprägniert, und zwar mit einer Acrylatdispersion als Klebmittel (entsprechend den polymeren Bestandteilen des Imprägniermittels), welche in homogener Phase dispergierte Acrylatpolymerteilchen enthält. Vorzugsweise wird eine wässrige Dispersion eingesetzt.

Die eingesetzte Acrylatdispersion weist hier einen Gewichtsanteil an Polymerteilchen von 50-65% auf, gegebenenfalls auch ≤ 40-50 Gew.-% auf, zumeist von ≥ 10-25 Gew.-% oder ≥ 30-40 Gew.-%, jeweils bezogen auf das Gesamtgewicht der Dispersion, was allgemein im Rahmen der Erfindung gelten kann.

Die Acrylatpolymerteilchen weisen nach dem Ausführungsbeispiel einen mittleren Durchmesser von 0,1-1 Mikrometer auf.

Die Acrylatpolymerteilchen weisen weniger als 2 Gew.-% einer Teilchenfraktion mit einem mittleren Durchmesser von > 50 µm auf, weniger als 1 Gew.-% einer Teilchenfraktion mit einem mittleren Durchmesser von > 100 µm und praktisch keinen (< 0,1 Gew.-%) Anteil einer Teilchenfraktion mit einem mittleren Durchmesser von > 200 µm.

Als Acrylat wird nach diesem Ausführungsbeispiel ein Acrylatpolymer eingesetzt, derart, dass das Imprägniermittel < 5 Gew.-% an dispergierten Polymerteilchen aufweist, welche kein Acrylat enthalten. Im speziellen ist das eingesetzte Acrylat ein Acrylat-Copolymer, genauer gesagt ein Acrylat-Butadien-Copolymer. Der Butadiengehalt des Copolymers kann 10-50 Gew.-% bezogen auf das Polymer betragen, beispielsweise ca. 15 Gew.-%. Bewährt haben sich aber auch reine Acrylat-Polymere, also ohne Copolymer-Bestandteile. Das eingesetzte Acrylatpolymer weist ≤ 5 Gew.-% oder nach einer besonderen Abwandlung praktisch keine ionischen Polymeren auf.

Nach einer Abwandlung dieses Ausführungsbeispiels kann als Imprägniermittel ein Acrylat-Polymer (auch Acrylat-Copolymer) eingesetzt werden, wobei weitere dispergiert Polymerteilchen vorliegen, welche nicht ein Acrylat-Polymer aufweisen. Diese Teilchen können beispielsweise dispergierte Kautschukpartikel, beispielsweise Polybutadienpartikel sein.

Das nach diesem Ausführungsbeispiel und dessen Abwandlungen eingesetzte Acrylat-Polymer hat eine Glasübergangstemperatur von -45°C. Das Acrylat-Copolymer weist nach dem Ausführungsbeispiel einen Polymerisationsgrad im Bereich von 1.000-50.000 Monomereneinheiten auf, beispielsweise ca. 20.000 Monomereneinheiten.

Das erfindungsgemäße einteilige Dichtband weist eine Höhe von ca. 4 cm auf, nach einer Abwandlung eine Höhe von ca. 12 cm. Das Dichtband kann auch in der Dicke doubliert sein.

Die Breite des Dichtbandes kann den jeweiligen Anforderungen entsprechend gewählt sein, beispielsweise kann das Dichtband eine derartige Breite aufweisen, dass dieses sich über die gesamte Tiefe der abzudichtenden Fuge, beispielsweise die gesamte Rahmenbreite bei einer zwischen einem Rahmenteil und einem Wandbereich ausgebildeten Fuge eingesetzt wird. Das Dichtband kann hierbei eine Breite von 5-15 cm aufweisen, ohne hierauf beschränkt zu sein. Diese Ausführungen in Bezug auf die Dichtbandbreite können allgemein im Rahmen der Erfindung gelten.

Das Dichtband weist nach dem Ausführungsbeispiel einen Gewichtsanteil von ca. 30% an Imprägniermittel auf, bezogen auf die Polymeranteile desselben in Bezug auf das Gesamtgewicht des imprägnierten Dichtbandes. Es versteht sich, dass allgemein im Rahmen der Erfindung das Imprägniermittel auch weitere Bestandteile aufweisen kann, beispielsweise Flammschutzmittel, Farbstoffe, Füllstoffe, Stoffe zur Einstellung der Wärmeleitfähigkeit des imprägnierten Dichtbandes, anorganische oder mineralische Füllstoffe geringer Wärmeleitfähigkeit oder dergleichen, und natürlich übliche Dispergierhilfsmittel, Stabilisatoren, Entschäumer und dgl. Auch diese können nach dem Ausführungsbeispiel insgesamt einen Gewichtsanteil von ca. 30-35 % des Dichtbandes ausmachen. Die Gewichtsangaben des Dichtbandes beziehen sich jeweils auf das getrocknete Dichtband.

Das Dichtband nach dem Ausführungsbeispiel wird derart hergestellt, dass der Schaumstoff einem das Imprägniermittel enthaltenen Tauchbad eines Walzenstuhls zugeführt wird, in welches ein Längenabschnitt des Schaumstoffs vollständig eintauchen kann. Der eingetauchte Dichtbandabschnitt wird durch geeignete Mittel, wie beispielsweise ein Walzenpaar unter Imprägnatniveau komprimiert und anschließend vollständig eintauchend im Bad zur Expansion gebracht, wobei die Expansion durch selbständige Rückstellung des Schaumstoffabschnittes erfolgt. Durch die Expansion nimmt das Schaumstoffmaterial Imprägniermittel auf, welches das Schaumstoffmaterial über den gesamten Querschnitt homogen durchdringt. Der derart mit Imprägniermittel vollgesogene Schaumstoffabschnitt wird dann aus dem Imprägniermittelbad herausgeführt, in mind. 1 Walzenpaar teilweise komprimiert, um überschüssiges Imprägniermittel herausdrücken und die aufgenommene Imprägniermittelmenge einzustellen und anschließend einem Durchlaufofen zur Trocknung des Dichtbandes zugeführt.

Die Höhe des Dichtbandes entspricht hierbei der Kompressionsrichtung des in dem Imprägniermittelbad befindlichen Dichtbandabschnittes, also auch der Expansionsrichtung des sich im Imprägniermittelbad zurückstellenden Dichtbandes.

Das derart hergestellte Dichtband weist bei 20°C/50% relativer Luftfeuchtigkeit und bei Kompression auf ca. 15% seines Ausgangsvolumens (bzw. Höhe) eine Rückstellzeit (bis zur vollständigen Rückstellung) von ca. 24 Stunden auf, bei 0°C eine Rückstellzeit von ca. 72 Stunden.

Wird aus dem Imprägniermittel ein Film (im getrockneten Zustand) durch Trocknung bei 75°C bei bewegter Luft zur Gewichtskonstanz hergestellt, so weist dieser unter den einleitend beschriebenen Bedingungen eine Zugfestigkeit von 0,05 N/mm2, eine Reißdehnung von 500% und eine Schäladhäsion (Klebkraft) auf Stahl von mindestens 0,2 N/25mm auf, bspw. ca. 0,5 N/25mm auf.

Nach einem weiteren Ausführungsbeispiel weist das Dichtband eine Luftdurchlässigkeit von ca. 75 l/m²s auf, das Imprägniermittel weist hierbei Acrylatpolymerteilchen mit einem mittleren Durchmesser von ca. 10 µm auf, wobei der Gewichtsanteil der Teilchenfraktion der Polymerteilchen mit einem mittleren Durchmesser von > 50 µm ≤ 5 Gew.-%, mit einem mittleren Durchmesser von > 100 µm ≤ 1 Gew.-% und mit einem mittleren Durchmesser von > 200 µm praktisch 0 (≤ 0,1 Gew.-%) beträgt. Im Übrigen sei auf das oben genannte Ausführungsbeispiel verwiesen, welches auch hier gilt.

Nach einem weiteren Ausführungsbeispiel ist das Dichtband, wie zu jedem der Ausführungsbeispiele beschrieben, in einer Bauwerksfuge eingesetzt, insbesondere einer Fuge zwischen einem Rahmenbauteil wie einem Fensterrahmen und der Fensterlaibung. Das Dichtband kann hierbei an dem jeweiligen Rahmenbauteil vormontiert werden und zusammen mit diesem in eine Mauerwerksöffnung eingesetzt werden, wobei das Dichtband vor oder nach Einsetzen in die Mauerwerksöffnung zur verzögerten Rückstellung freigegeben werden kann.

Das erfindungsgemäße Dichtband zeichnet sich dadurch aus, dieses auch bei erhöhter Temperatur (z.B. 50°C) und erhöhtem Druck (z.B. bei einer Kompression auf 7 % dessen Volumens (bzw. Höhe) bei vollständiger freier Rückstellung) eine hohe Lebensdauer aufweist. Es wird unter diesen Bedingungen, wie sie sich bei temperaturbedingten Bauteilverschiebungen im Fugenbereich ohne weiteres ergeben können, praktisch kein Fließen des Imprägniermittelfilmes beobachtet, welcher sich bspw. durch Ansammlung von Imprägniermittel an den nicht druckbelasteten Dichtbandflächen bemerkbar machen kann. Dies kann bspw. durch entsprechende Versuche im Trockenschrank simuliert werden, wobei bei erfindungsgemäßen Dichtbändern auch nach 1-2 Stunden oder auch nach 5-10 Stunden oder darüber hinaus, bspw. nach 24 oder 48 Stunden keine Veränderung bzw. kein Ausbluten zu beobachten ist, wobei durch Imprägnierung mit Acrylatlösungen hergestellte Dichtbänder ein deutlich instabileres Verhalten zeigen.

## Patentansprüche

1. Dichtband aus einem weichen Polyurethan-Schaumstoff, welches eine Luftdurchlässigkeit von höchstens 150 l/m²s aufweist und welches zur verzögerten Rückstellung zumindest im Wesentlichen homogen über dessen gesamten Querschnitt und Länge imprägniert ist, wobei das Imprägniermittel zur verzögerten Rückstellung eine Acrylatdispersion mit in homogener Phase dispergierten Acrylatpolymerteilchen ist und das Acrylatpolymer eine Glasübergangstemperatur von -70°C bis +20°C aufweist, **dadurch gekennzeichnet, dass**
die Acrylatpolymerteilchen einen mittleren Durchmesser von ≥ 5 nm und von ≤ 150 µm aufweisen und das Dichtband mit einem Gewichtsanteil an Acrylatdispersion zur verzögerten Rückstellung imprägniert ist, wobei der Gewichtsanteil der Polymeranteile des Imprägniermittels in Bezug auf das Gewicht des Weichschaumstoffs des Dichtbandes (100%) im Bereich von 20-275% liegt, so dass das Dichtband bei 20°C/50% relativer Luftfeuchtigkeit eine Rückstellverzögerung von ≥ 15 min bei einem Kompressionsgrad des Dichtbandes auf 15% (Dichtbandvolumen bzw. Höhe des komprimierten Dichtbandes von 15% in Bezug auf das Dichtbandvolumen bei vollständiger Rückstellung) bis zur vollständigen Rückstellung desselben aufweist.

2. Dichtband nach Anspruch 1, **dadurch gekennzeichnet, dass** die Acrylatpolymerteilchen weniger als 10 Gew.-% einer Teilchenfraktion mit einem mittleren Durchmesser von > 200 µm aufweisen.

3. Dichtband nach einem der Ansprüche 1 oder 2, **dadurch gekennzeichnet, dass** das zur verzögerten Rückstellung imprägnierte Dichtband eine Luftdurchlässigkeit von ≤ 50 l/m²s oder ≤ 25 l/m²s aufweist.

4. Dichtband nach einem der Ansprüche 1 bis 3, **dadurch gekennzeichnet, dass** das Acrylatpolymer ≤ 50 Gew.-% an ionischen Polymeren enthält.

5. Dichtband nach einem der Ansprüche 1 bis 4, **dadurch gekennzeichnet, dass** das Acrylatpolymer ein Copolymer ist und das Copolymer weitere Bestandteile mit Butadien- und/oder Styrol-Einheiten umfasst.

6. Dichtband nach einem der Ansprüche 1 bis 5, **dadurch gekennzeichnet, dass** das Imprägniermittel derart ausgewählt ist, dass ein Imprägniermittelfilm desselben eine Zugfestigkeit von ≥ 0,001 N/mm² und/oder ≤ 5 N/mm² aufweist und/oder dass das Imprägniermittel derart ausgewählt ist, dass ein Imprägniermittelfilm desselben eine Reißdehnung von ≥ 50% und/oder ≤1500% aufweist.

7. Dichtband nach einem der Ansprüche 1 bis 6, **dadurch gekennzeichnet, dass** der Imprägniermittelfilm des Dichtbandes eine Schichtdicke im Bereich von 5 - 150 µm aufweist.

8. Dichtband nach einem der Ansprüche 1 bis 7, **dadurch gekennzeichnet, dass** das Dichtband mit einem Gewichtsanteil an Acrylatdispersion zur verzögerten Rückstellung imprägniert ist, so dass das Dichtband bei 20°C/50% relativer Luftfeuchtigkeit eine Rückstellverzögerung von ≤ 24 Stunden bei einem Kompressionsgrad des Dichtbandes auf 15% (Dichtbandvolumen bzw. Höhe des komprimierten Dichtbandes von 15% in Bezug auf das Dichtbandvolumen bei vollständiger Rückstellung) bis zur vollständigen Rückstellung desselben aufweist.

9. Dichtband nach einem der Ansprüche 1 bis 8, **dadurch gekennzeichnet, dass** das Dichtband hergestellt ist unter Anwendung der Schritte der Imprägnierung des Schaumstoffes mit einer wässrigen Polyacrylat-Dispersion und Trocknung des Bandes.

10. Dichtband nach einem der Ansprüche 1 bis 9, **dadurch gekennzeichnet, dass** dieses in der Fuge vollständig expandiert auf 10 - 50% seines Volumens bzw. Höhe bei vollständiger freier Rückstellung komprimiert ist.

11. Bauwerk mit einem in einer Fuge angeordneten Dichtband nach einem der Ansprüche 1 bis 10.

12. Bauwerk nach Anspruch 11, **dadurch gekennzeichnet, dass** die Fuge eine Fuge zwischen einer Mauerwerksöffnung und einem in die Mauerwerksöffnung eingesetzten Bauteil ist.

## Claims

1. A soft polyurethane foam sealing tape which has an air permeability of at most 150 l/m²s and which is impregnated for delayed recovery at least substantially homogeneously over its entire cross-section and length, wherein the delayed recovery impregnating agent is an acrylate dispersion having acrylate polymer particles dispersed in homogeneous phase and the acrylate polymer has a glass transition temperature of from -70°C to +20°C,
**characterized in that**
the acrylate polymer particles have an average diameter of ≥ 5 nm and of ≤ 150 µm and the sealing tape is impregnated with a weight fraction of acrylate dispersion for delayed recovery, wherein the weight fraction of the polymeric components of the impregnating agent relative to the weight of the flexible foam of the sealing tape (100%) is in the range of 20-275%, such that the sealing tape has a delayed recovery of ≥ 15 min at 20°C/50% relative humidity when the sealing tape is compressed to 15% (sealing tape volume resp. height of the compressed sealing tape of 15% in relation to the sealing tape volume at full recovery) until the sealing tape is fully recovered.

2. The sealing tape of claim 1, **characterized in that** the acrylate polymer particles comprise less than 10% by weight of a particle fraction having an average diameter of > 200 µm.

3. The sealing tape according to one of claims 1 or 2, **characterized in that** the sealing tape impregnated for delayed recovery has an air permeability of ≤ 50 l/m²s or ≤ 25 l/m²s.

4. The sealing tape according to any one of claims 1 to 3, **characterized in that** the acrylate polymer contains ≤ 50% by weight of ionic polymers.

5. The sealing tape according to any one of claims 1 to 4, **characterized in that** the acrylate polymer is a copolymer and the copolymer comprises further components with butadiene and/or styrene units.

6. The sealing tape according to any one of claims 1 to 5, **characterized in that** the impregnating agent is selected such that an impregnating agent film thereof has a tensile strength of ≥ 0.001 N/mm² and/or ≤ 5 N/mm² and/or that the impregnating agent is selected such that an impregnating agent film thereof has an elongation at break of ≥ 50% and/or ≤ 1500%.

7. The sealing tape according to any one of claims 1 to 6, **characterized in that** the impregnating agent film of the sealing tape has a layer thickness in the range of 5 - 150 µm.

8. The sealing tape according to any one of claims 1 to 7, **characterized in that** the sealing tape is impregnated with a weight percentage of acrylate dispersion for delayed recovery, such that the sealing tape has a recovery delay of ≤ 24 hours at 20°C/50% relative humidity when the sealing tape is compressed to 15% (sealing tape volume resp. height of the compressed sealing tape of 15% in relation to the sealing tape volume at full recovery) until full recovery of the same.

9. The sealing tape according to any one of claims 1 to 8, **characterized in that** the sealing tape is manufactured using the steps of impregnating the foam with an aqueous polyacrylate dispersion and drying the tape.

10. The sealing tape according to any one of claims 1 to 9, **characterized in that** it is fully expanded in the joint and compressed to 10 - 50% of its volume or height at full free recovery.

11. Structure with a sealing tape arranged in a joint according to any one of claims 1 to 10.

12. The structure of claim 11, **characterized in that** the joint is a joint between a masonry opening and a component inserted into the masonry opening.

## Revendications

1. Bande d'étanchéité composée d'une mousse molle à base de polyuréthane, laquelle présente une perméabilité à l'air d'au maximum 150 l/m²s et laquelle est imprégnée, pour le retardement de la reprise élastique, au moins sensiblement de manière homogène sur la totalité de sa section transversale et de sa longueur, dans laquelle l'agent d'imprégnation pour le retardement de la reprise élastique est une dispersion d'acrylate avec des particules de polymère d'acrylate dispersées dans une phase homogène et le polymère d'acrylate présente une température de transition vitreuse de -70 °C à +20 °C, **caractérisée en ce que**
les particules de polymère d'acrylate présentent un diamètre moyen ≥ 5 nm et ≤ 150 µm et la bande d'étanchéité est imprégnée d'un pourcentage en poids de dispersion d'acrylate pour le retardement de la reprise élastique, dans laquelle le pourcentage en poids des proportions de polymère de l'agent d'imprégnation se situe, par rapport au poids de la mousse molle de la bande d'étanchéité (100 %), dans la plage de 20 - 275 % si bien que la bande d'étanchéité présente, à 20 °C/pour une humidité de l'air relative de 50 %, un retardement de sa reprise élastique ≥ 15 min pour un degré de compression de la bande d'étanchéité sur 15 % (volume de bande d'étanchéité ou hauteur de la bande d'étanchéité comprimée de 15 % par rapport au volume de bande d'étanchéité lors d'une reprise élastique totale) jusqu'à la reprise élastique totale de celle-ci.

2. Bande d'étanchéité selon la revendication 1, **caractérisée en ce que** les particules de polymère d'acrylate présentent moins de 10 % en poids d'une fraction de particules avec un diamètre moyen > 200 µm.

3. Bande d'étanchéité selon l'une quelconque des revendications 1 ou 2, **caractérisée en ce que** la bande d'étanchéité imprégnée pour le retardement de la reprise élastique présente une perméabilité à l'air ≤ 50 l/m²s ou ≤ 25 l/m²s.

4. Bande d'étanchéité selon l'une quelconque des revendications 1 à 3, **caractérisée en ce que** le polymère d'acrylate contient ≤ 50 % en poids de polymères ioniques.

5. Bande d'étanchéité selon l'une quelconque des revendications 1 à 4, **caractérisée en ce que** le polymère d'acrylate est un copolymère et le copolymère comprend d'autres constituants avec des motifs de butadiène et/ou de styrène.

6. Bande d'étanchéité selon l'une quelconque des revendications 1 à 5, **caractérisée en ce que** l'agent d'imprégnation est choisi de telle manière qu'un film d'agent d'imprégnation de celle-ci présente une résistance à la traction ≥ 0,001 N/mm² et/ou ≤ 5 N/mm², et/ou que l'agent d'imprégnation est choisi de telle manière qu'un film d'agent d'imprégnation de celle-ci présente un allongement à la rupture ≥ 50 % et/ou ≤ 1500 %.

7. Bande d'étanchéité selon l'une quelconque des revendications 1 à 6, **caractérisée en ce que** le film d'agent d'imprégnation de la bande d'étanchéité présente une épaisseur de couche dans la plage de 5 - 150 µm.

8. Bande d'étanchéité selon l'une quelconque des revendications 1 à 7, **caractérisée en ce que** la bande d'étanchéité est imprégnée d'un pourcentage en poids d'une dispersion d'acrylate pour le retardement de la reprise élastique de sorte que la bande d'étanchéité présente à 20 °C/pour une humidité de l'air relative de 50 %, un retardement de sa reprise élastique ≤ 24 heures pour un degré de compression de la bande d'étanchéité sur 15 % (volume de bande d'étanchéité ou hauteur de la bande d'étanchéité comprimée de 15 % par rapport au volume de bande d'étanchéité lors d'une reprise élastique totale) jusqu'à la reprise élastique totale de celle-ci.

9. Bande d'étanchéité selon l'une quelconque des revendications 1 à 8, **caractérisée en ce que** la bande d'étanchéité est fabriquée en appliquant les étapes de l'imprégnation de la mousse avec une dispersion aqueuse d'acrylate et du séchage de la bande.

10. Bande d'étanchéité selon l'une quelconque des revendications 1 à 9, **caractérisée en ce que** celle-ci est comprimée dans la jointure de manière totalement expansée à 10-50 % de son volume ou de sa hauteur lors d'une reprise élastique libre totale.

11. Ouvrage de construction avec une bande d'étanchéité selon l'une quelconque des revendications 1 à 10 disposée dans une jointure.

12. Ouvrage de construction selon la revendication 11, **caractérisé en ce que** la jointure est une jointure entre une ouverture d'ouvrage de maçonnerie et un composant inséré dans l'ouverture d'ouvrage de maçonnerie.
